# EUROPÄISCHE PATENTSCHRIFT

(11) **EP 1 189 177 B1**
(45) Veröffentlichungstag und Bekanntmachung des Hinweises auf die Patenterteilung: **01.03.2006**
(21) Anmeldenummer: 01116502.4
(22) Anmeldetag: 07.07.2001
(51) Int. Cl.: G07C 5/00

(54) **Diagrammscheibenträger für einen Fahrtschreiber**
Record chart carrier for a tachograph
Support de disque-diagramme pour tachygraphe

(30) Priorität: 10.08.2000 DE 20013744 U
(43) Veröffentlichungstag der Anmeldung: 20.03.2002
(73) Patentinhaber: SIEMENS AKTIENGESELLSCHAFT, 80333 München (DE)
(72) Erfinder: Höni, Helmut, Dipl.-Ing. (FH), Schramberger Weg 34 (DE)

(56) Entgegenhaltungen:
- EP-A- 0 337 477
- EP-A- 0 662 561
- DE-A- 19 730 982
- DE-A- 19 804 647
- DE-U- 20 002 560

## Beschreibung

Die Erfindung betrifft einen Fahrtschreiber mit einem Diagrammscheibenträger, wobei der Diagrammscheibenträger in dem Fahrtschreiber verschiebbar gelagert ist, zur Vermeidung des Verkantens des Diagrammscheibenträgers in dem Gehäuse des Fahrtschreibers zahnschienen angeordnet sind und in dem Diagrammscheibenträger in zwei voneinander getrennten Lagerungen eine Führungswelle gelagert ist, welche an den freien Enden der Zahnschienen zugeordnete Ritzel trägt.

Neuerdings wird für einen Fahrtschreiber, bei dem als Aufzeichnungsträger Diagrammscheiben Anwendung finden, ein quaderförmiges Gehäuse vorgesehen, in welchem ein Diagrammscheibenträger wenigstens schubladenartig verschiebbar gelagert ist. Für gewisse Einbausituationen eines derartigen Fahrtschreibers, insbesondere für Einbaulagen außerhalb des Armaturenbretts, beispielsweise in der Fahrzeugtüre, in der Mittelkonsole oder im Dachunterbau eines Fahrzeuges, ist das Auffädeln der Diagrammscheiben auf den an der uhrzeitrichtig angetriebenen Diagrammscheibenauflage ausgebildeten Zentrier- und Mitnahmedorn problematisch, so dass es zweckmäßig ist, den Fahrtschreiber so auszurüsten, dass der Diagrammscheibenträger, um in eine handhabungsgünstige Einlege-/Entnahmeposition zu gelangen, zusätzlich verschwenkt werden kann.

Insbesondere bei den letztgenannten Einbausituationen kann die Verschiebeebene des Diagrammscheibenträgers in einem relativ großen Winkel zur Horizontalen angeordnet sein, wodurch die Gefahr besteht, dass ein leichtgängig gelagerter Diagrammscheibenträger bei unachtsamer Handhabung bis zum jeweiligen Anschlag in das Gerät hinein- oder aus dem Gerät herausfällt. Auf der anderen Seite ist eine Leichtgängigkeit erforderlich, um den Fertigungsaufwand zu minimieren, das heißt, es müssen bei der konstruktiven Gestaltung der Führung des Diagrammscheibenträgers innerhalb des Gehäuses großseriengerechte Toleranzen vorgesehen und außerdem die Toleranzlagen so gewählt werden, dass von vornherein Nacharbeit vermieden ist. Dadurch kann bei ungünstigen Toleranzadditionen erhebliches Spiel entstehen, was eine Beeinträchtigung bei der Handhabung des Diagrammscheibenträgers zur Folge hat, und zwar wenigstens insofern als der Diagrammscheibenträger entweder nach dem Entriegeln selbsttätig aus dem Gerät herausgleitet oder von sich aus nicht in einer Einlege-/Entnahmeposition verbleibt. Darüber hinaus kann die im Zusammenhang mit der Führung des Diagrammscheibenträgers gegebene Toleranzsituation den Eindruck mangelnder Qualität erwecken und damit das gesamte Gerät negativ beeinflussen.

Grundsätzlich ist das geschilderte Problem unter Beibehaltung der fertigungstechnisch erforderlichen Toleranzen dadurch lösbar, dass dem Diagrammscheibenträger Bremsmittel zugeordnet werden.

Aus der deutschen Offenlegungsschrift DE 198 04 647 A1 ist bereits ein Fahrtschreiber mit einem Diagrammseheibenträger bekannt, welcher Diagrammscheibenträger in dem Fahrtschreiber verschiebbar gelagert ist und bei dem zur Vermeidung des Verkantens des Diagrammscheibenträgers in dem Gehäuse des Fahrtschreibers Zahnschienen angeordnet sind, wobei in dem Diagrammscheibenträger in zwei voneinander getrennten Lagerungen eine Führungswelle gelagert ist, welche an dem freien Enden den Zahnschienen zugeordnete Ritzel trägt. Es hat sich jedoch herausgestellt, dass die Diagrammscheibe unbeabsichtigt herausfallen kann, wenn die Bewegungen des Trägers aufgrund der eigentlich gewünschten Leichtgängigkeit zu schnell erfolgen.

Die der vorliegenden Erfindung gestellte Aufgabe besteht somit darin, eine Bremsanordnung zu schaffen, die mit möglichst geringem Fertigungs- und Montageaufwand herstellbar ist, die geringen Raumbedarf erfordert und die ausreichend hohe Standzeit bietet.

Die Lösung der Aufgabe sieht vor, dass die Führungswelle des Diagrammscheibenträgers quer zur Längsachse elastisch verformt gelagert ist.

Die gefundene Lösung, die der gestellten Aufgabe in vollem Umfang gerecht wird, nutzt in vorteilhafter Weise die Federungseigenschaft der relativ langen Führungswelle und erzielt die angestrebte Schwergängigkeit durch die Reibung der elastisch verformten Führungswelle an den mit der Führungswelle im Sinne eines gekrümmten Einbaus zusammenwirkenden Stützelementen bzw. Lagerungen.

Ein Ausführungsbeispiel, bei dem die Führungswelle mittig durch eine am Diagrammscheibenträger ausgebildete Auflage abgestützt wird, die als Lagerschale oder Lagerbohrung ausgebildet sein kann, löst die gestellte Aufgabe ohne dass ein zusätzliches Bauteil benötigt wird. Ein anderes Ausführungsbeispiel bietet unter Verwendung von auf einfache Weise herzustellenden Lagerbuchsen die Möglichkeit des wahlweisen Dosierens der Schwergängigkeit sowie der Anpassung an die gegebenen Spiele bzw, an Kundenwünsche bezüglich des vorzusehenden Verschiebewiderstandes des Diagrammscheibenträgers . Durch ein verdrehfestes Verbinden der Lagerbuchse mit der Führungswelle oder ein unmittelbares Anformen eines Reibrades bei einer aus Kunststoff hergestellten Führungswelle wird der Reibradius vergrößert, sodass die Durchbiegung der Führungswelle bei gleichbleibender Bremsfunktion geringer sein kann und damit die Lagerbelastung reduziert ist. Mit einer Lagerbuchse, die radial auf die Führungswelle aufgesteckt werden kann und danach in die die Führungswelle verspannende Lage verschoben wird ergibt sich der Vorteil der Nachrüstbarkeit. Ein anderes Ausführungsbeispiel, bei dem sich eine aus Kunststoff hergestellte Führungswelle mittels angeformter Flansche an den Lagerungen stirnseitig abstützt, hat bei geringstem Raumbedarf ebenfalls den Vorteil, dass kein zusätzliches Bauteil erforderlich ist.

Erwähnenswert ist ferner, dass in allen Fällen die Führungswelle richtungsunabhängig vorgespannt werden kann. Eine entscheidende Wirkung bietet die Bremsanordnung bezüglich einer verbesserten betätigungssympatischen Handhabung. Das heißt, der Diagrammscheibenträger kann zügig bewegt werden, muss bei geöffneter Stellung und geneigtem Einbau des Fahrtschreibers nicht zusätzlich gehalten werden und muss bewusst geschlossen werden. Dabei ermöglicht es die Erfindung, diese Vorzüge mit einem sehr geringen Aufwand zu erzielen.

Im folgenden sei die Erfindung anhand von Zeichnungen eines Ausführungsbeispieles näher erläutert.

Es zeigen:
- Figur 1: eine Frontansicht eines gattungsgemäßen Fahrtschreibers, bei welchem, wie aus der Figur 2 ersichtlich ist, ein Diagrammscheibenträger sowohl verschiebbar als auch verschwenkbar ausgebildet und angeordnet ist,
- Figur 2: eine Seitenansicht des Fahrtschreibers gemäß Figur 1 mit einem aus dem Gehäuse teilweise herausbewegten Diagrammscheibenträger und mit einem Freischnitt im Bereich einer dem Diagrammscheibenträger zugeordneten Führungswelle,
- Figur 3: eine teilweise dargestellte Untersicht des Diagrammscheibenträgers gemäß Figur 2 mit der erfindungsgemäß angeordneten Führungswelle.

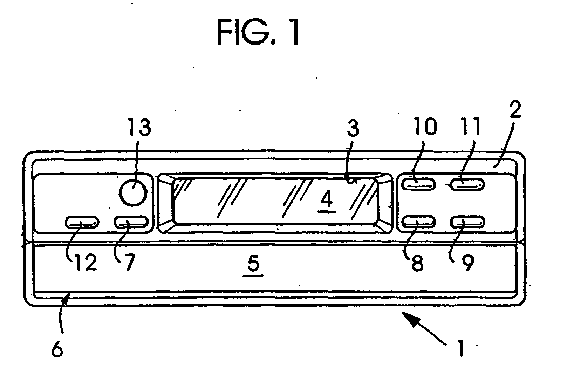

In Figur 1 ist mit 1 das quaderförmige Gehäuse des beispielsweisen Fahrtschreibers bezeichnet, an dessen Frontwand 2 ein Fensterausschnitt 3 für ein der Frontwand 2 zugeordnetes Display 4 ausgebildet ist. 5 stellt die frontseitige Blende eines in dem Gehäuse 1 geführten Diagrammscheibenträgers 6 dar. Von in der Frontwand 2 gelagerten Tasten 7, 8, 9, 10, 11 und 12 sind die Tasten 7 und 8 sowie die als Menütaste dienende Taste 9 dem Fahrer beziehungsweise dem Beifahrer zum Anwählen wenigstens der wichtigsten Arbeitszeitdaten zugeordnet. Die Tasten 10 und 11 dienen dem Vor- und Rückwärtsblättern in den jeweils angewählten Datensätzen, die Taste 12 ist für das Entriegeln und Freigeben des im Gehäuse 1 schubladenartig bewegbaren und in einer Gelenkposition außerhalb des Gehäuses 1 verschwenkbaren Diagrammscheibenträgers 6 vorgesehen. Mittels einer mit 13 bezeichneten Plombe ist der Zugang zur einer Diagnosebuchse gesichert.

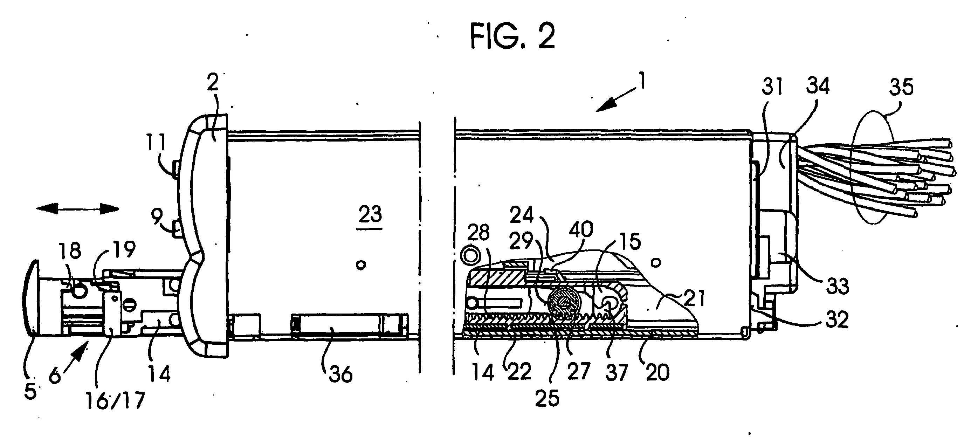

Die Figur 2 zeigt den Diagrammscheibenträger 6 in einer Position, in welcher er, wenn beispielsweise Diagrammscheiben gewechselt werden sollen, von Hand gegriffen und aus dem Fahrtschreiber herausgezogen werden kann. In dieser Position ragen dem Diagrammscheibenträger 6 zugeordnete Zahnschienen 14 und 15, welche gemeinsam mit dem Diagrammscheibenträger 6 beim Betätigen der Taste 12 freigegeben werden um ein gewisses Maß aus dem Fahrtschreiber heraus und bilden mittels frontseitig angebrachter Anschlagelemente 16 und 17 die außerhalb des Fahrtschreibers liegende Gelenkposition für den Diagrammscheibenträger 6, wobei die Zahnschienen 14, 15 in dieser Position verriegelt sind. Diese Verriegelung wird dem Zurückschieben des Diagrammscheibenträgers 6 in die Registrierposition, in der der Diagrammscheibenträger 6 seinerseits verriegelt ist, aufgehoben. Am Diagrammscheibenträger 6 ausgebildete Finger 18 und in den Zahnschienen 14, 15 vorgesehene Schlitze 19 dienen der Schaffung einer spielfreien Verbindung zwischen den Zahnschienen 14, 15 und dem Diagrammscheibenträger 6.

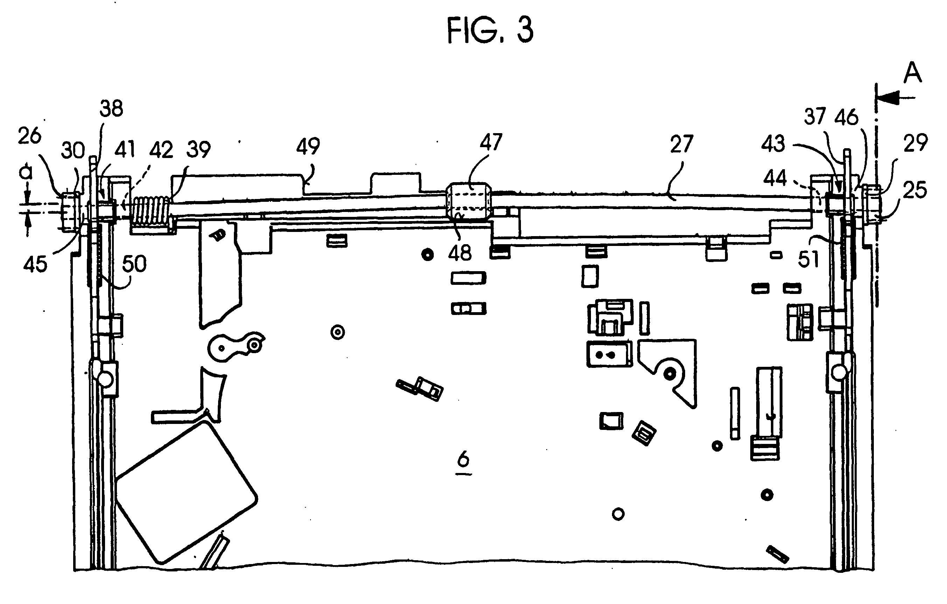

Die Zahnschienen 14, 15 die, wie aus dem Freischnitt in Figur 2 ersichtlich ist, als Stahlblech/Kunststoff-Verbundteile hergestellt sind, sind in Führungsschienen 20 und 21 gelagert. Letztere sind den Winkeln zwischen dem Boden 22 und den Seitenwänden 23 und 24 des Gehäuses 1 zugeordnet und vorzugsweise an den Seitenwänden 23, 24 befestigt. Zum besseren Verständnis des in Figur 2 vorgesehenen Freischnitts ist dessen Lage in Figur 3 angedeutet und mit A bezeichnet. Der Freischnitt, der einen Ausbruch in der Seitenwand 23, im Boden 22 und in der Führungsschiene 20 bildet, schneidet die u-förmig ausgebildete Zahnschiene 14 in Längsrichtung. Dadurch wird eine Seitenansicht des Diagrammscheibenträgers 6 in dessen rückwärtigen Bereich ermöglicht.

Mit 25 und 26 (Figur 3) sind zwei auf einer in dem Diagrammscheibenträger 6 drehbar gelagerten führungswelle 27 mittels D-Profil-Verbindungen verdrehfest angeordnete Ritzel bezeichnet, die jeweils mit den Zahnstangen 14 und 15 in Eingriff stehen. Dabei sind, damit ein ordnungsgemäßer Zahneingriff gewährleistet ist, das heißt die Ritzel 25, 26 nicht im Zahngrund der Verzahnungen 28 der Zahnschienen 14, 15 aufsitzen, die Ritzel 26, 27 mit Laufbunden 29 und 30 versehen, die zwischen den nicht bezeichneten Schenkeln der u-profilierten Zahnschienen 14, 15 geführt sind.

Der Vollständigkeit halber sei noch erwähnt, dass mit 31 eine an der Rückwand 32 des Gehäuses 1 angebrachte Abdeckung eines Batteriefachs bezeichnet ist, dass 33 einen rückwärtigen Ausrichtzapfen des Gehäuses 1 darstellt, dass mit 34 eine Abdeckkappe für die dem Fahrtschreiber zugeordneten Stecker bezeichnet ist und dass ein aus der Abdeckkappe 34 heraustretendes, der Steckerbelegung entsprechendes Leitungsbündel mit dem Bezugszeichen 35 versehen ist. Außerdem sind in den Seitenwänden 23, 24 vertieft liegend ausgebildete Begrenzungsanschläge 36 vorgesehen, die dem Einrasten von Sperrfedem dienen, welche an einem dem Einbau des Fahrtschreibers dienenden Rahmen ausgebildet sind. 37 und 38 bezeichnen im Diagrammscheibenträger 6 gefedert gelagerte Fangarme, welche in der Einlege-/Entnahmeposition des verschwenkten Diagrammscheibenträgers 6 mit an den in geeigneter Weise verbreiteten Führungsschienen 14, 15 im Sinne eines Endanschlages bezüglich des Schwenkwinkels des Diagrammscheibenträgers 6 zusammenwirken. In diesem Zusammenhang ist außerdem wenigstens eine Schenkelfeder 39 vorgesehen, deren einer Schenkel 40 kurz vor Erreichen der Anschlagstellung der Fangarme 37, 38 mit der Führungsschiene 15 im Sinne einer Dämpfung der Schwenkbewegung des Diagrammscheibenträgers 6 in Wirkverbindung kommt.

Wie insbesondere aus der Untersicht, Figur 3, ersichtlich ist, sind für die Lagerung der Führungswelle 27 im Diagrammscheibenträger 6 jeweils axial versetzt, gegeneinander weisende Lagerschalen 41, 42 und 43, 44-sowie relativ kurze, geschlossene Lagerungen 45 und 46 vorgesehen. Die Führungswelle 27 ist ferner in einer Lagerbuchse 47 drehbar gelagert, welcher am Diagrammscheibenträger 6 eine gegebenenfalls eingesenkt ausgebildeten Stützfläche 48 zugeordnet ist. Dabei sind bei Anlage der Lagerbuchse 47 an der Stützfläche 48 die geometrische Achse der Lagerbuchse 47 und die geometrische Achse der Lagerungen 41, 42 und 45 sowie 43, 44 und 46 um ein Maß "a" versetzt, was eine elastische Verbiegung und ein radiales Abstützen der Führungswelle 27 in den Lagerungen und somit Spielfreiheit und erhöhte Reibung zur Folge hat. Das heißt, die angestrebte Schwergängigkeit wird auf sehr einfache Weise erzielt nämtich durch Aufstecken der Lagerbuchse 47 bei der Montage der Führungswelle 27. Bei dem dargestellten Ausführungsbeispiel *betragen* der Durchmesser der aus Stahl hergestellte Führungswelle 27 3 mm, die freie Länge der Führungswelle 27 ca. 140 mm und das Maß "a" 1,4 mm.

Abschließend sei noch darauf hingewiesen, dass mit 49 eine der seitlichen Ausrichtung des Diagrammscheibenträgers 6 dienende Aussparung bezeichnet ist und dass die Fangarme 37, 38, welche mittels Langlöcher auf der Führungswelle 27 verschiebbar gelagert sind, unter der Wirkung von Druckfedern 50 und 51 stehen. Sinn dieser Maßnahme ist es, die Fangarme 37, 38 über die eigentliche Gerätetiefe hinaus verlängern zu können, um einen möglichst langen Hebelarm für das Abstützen des Diagrammscheibenträgers 6 in der Einlege-/Entnahmeposition zu erzielen.

## Patentansprüche

1. Fahrtschreiber mit einem Diagrammscheibenträger (6), wobei der Diagrammscheibenträger (6) in dem Fahrtschreiber verschiebbar gelagert ist, zur Vermeidung des Verkantens des Diagrammscheibenträgers (6) in dem Gehäuse (1) des Fahrtschreibers Zahnschienen (14) angeordnet sind und in dem Diagrammscheibenträger (6) in zwei voneinander getrennten Lagerungen (41 bis 46) eine Führungswelle (27) gelagert ist, welche an den freien Enden den Zahnschienen (14) zugeordnete Ritzel (25, 26) trägt, **dadurch gekennzeichnet, dass** die Führungswelle (27) des Diagrammscheibenträgers (6) quer zur Längsachse elastisch verformt gelagert ist.

2. Fahrtschreiber nach Anspruch 1, **dadurch gekennzeichnet, dass** zwischen den Lagerungen (41 bis 46) der Führungswelle (27), vorzugsweise mittig, eine der Führungswelle (27) zugeordnete Auflage ausgebildet ist.

3. Fahrtschreiber nach Anspruch 2, **dadurch gekennzeichnet, dass** als Auflage eine weitere wenigstens als Lagerschale ausgebildete Lagerung derart angeformt ist, dass sie mit den außenliegenden Lagerungen (41 bis 46) der Führungswelle (27) nicht fluchtet.

4. Fahrtschreiber nach Anspruch 1, **dadurch gekennzeichnet, dass** eine mit der Führungswelle (27) verbindbare Lagerbuchse (47) vorgesehen ist und dass an dem Diagrammscheibenträger (6) eine der Lagerbuchse (47) zugeordnete Stützfläche (48) ausgebildet ist.

5. Fahrtschreiber nach Anspruch 4, **dadurch gekennzeichnet, dass** die Lagerbuchse (47) mit der Führungswelle (27) verdrehfest verbindbar ist.

6. Fahrtschreiber nach Anspruch 4, **dadurch gekennzeichnet, dass** ein auf die Führungswelle (27) in radialer Richtung aufsteckbarer Abstandhalter vorgesehen ist.

7. Fahrtschreiber nach Anspruch 1, **dadurch gekennzeichnet, dass** die Lagerungen (41 bis 46) wenigstens teilweise als Lagerschalen (41, 42, 43, 44) ausgebildet sind.

8. Fahrtschreiber nach Anspruch 1, **dadurch gekennzeichnet, dass** die Führungswelle (27) aus Kunststoff hergestellt ist und dass mittig zwischen den äußeren Enden der Führungswelle ein Reibrad angeformt ist.

9. Fahrtschreiber nach Anspruch 1, **dadurch gekennzeichnet, dass** die Führungswelle (27) aus Kunststoff hergestellt ist und dass an der Führungswelle Flansche angeformt sind derart, dass das Maß zwischen den Außenflächen der Flansche größer ist als das Maß zwischen den einander zugewandten Stirnflächen der in geeigneter Weise freigestellten, am Diagrammscheibenträger (6) ausgebildeten Lagerungen (41 bis 46) der Führungswelle (27).

## Claims

1. Tachograph having a diagram disc carrier (6), the diagram disc carrier (6) being displacably mounted in the tachograph, toothed rails (14) being arranged in the housing (1) of the tachograph in order to prevent the diagram disc carrier (6) from tilting, and a guide shaft (27), which is fitted with pinions (25, 26) which are assigned at the free ends to the toothed rails (14), being mounted in two bearings (41 to 46) which are separated from one another in the diagram disc carrier (6), **characterized in that** the guide shaft (27) of the diagram disc carrier (6) is mounted in such a way that it is deformed elastically in the transverse direction with respect to the longitudinal axis.

2. Tachograph according to Claim 1, **characterized in that** a support which is assigned to the guide shaft (27) is formed, preferably centrally, between the bearings (41 to 46) of the guide shaft (27).

3. Tachograph according to Claim 2, **characterized in that** a further bearing, which is embodied at least as a bearing shell, is formed as a support in such a way that it is not aligned with the external bearings (41 to 46) of the guide shaft (27).

4. Tachograph according to Claim 1, **characterized in that** a bearing bushing (47) which can be connected to the guide shaft (27) is provided, and **in that** a support face (48) which is assigned to the bearing bushing (47) is formed on the diagram disc carrier (6).

5. Tachograph according to Claim 4, **characterized in that** the bearing bushing (47) can be connected fixed in terms of rotation to the guide shaft (27).

6. Tachograph according to Claim 4, **characterized in that** a spacer element which can be plugged onto the guide shaft (27) in the radial direction is provided.

7. Tachograph according to Claim 1, **characterized in that** the bearings (41 to 46) are formed at least partially as bearing shells (41, 42, 43, 44).

8. Tachograph according to Claim 1, **characterized in that** the guide shaft (27) is manufactured from plastic, and **in that** a friction wheel is formed centrally between the outer ends of the guide shaft.

9. Tachograph according to Claim 1, **characterized in that** the guide shaft (27) is manufactured from plastic, and **in that** flanges are formed on the guide shaft in such a way that the dimension between the external surfaces of the flanges is greater than the dimension between the end surfaces, facing one another, of the suitably exposed bearings (41 to 46), formed on the diagram disc carrier (6), of the guide shaft (27).

## Revendications

1. Tachygraphe comportant un support (6) de disques-diagrammes, où le support (6) de disques-diagrammes est monté d'une façon coulissante dans le tachygraphe, où, pour éviter que le support (6) de disques-diagrammes se coince en basculant, des barres dentées (14) sont disposées dans le boîtier (1) du tachygraphe et où, dans le support (6) de disques-diagrammes, est monté, sur deux paliers séparés l'un de l'autre (41 à 46), un arbre d'entraînement (27) qui porte des pignons (25, 26) correspondant aux extrémités libres des barres dentées (14) **caractérisé par le fait que** l'arbre d'entraînement (27) du support (6) de disques-diagrammes est monté perpendiculairement à l'axe longitudinal et est déformable d'une façon élastique.

2. Tachygraphe selon la revendication 1 **caractérisé par le fait que**, entre les paliers (41 à 46) de l'arbre d'entraînement (27), d'une façon préférentielle, au milieu, est ménagé un appui correspondant à l'arbre d'entraînement (27).

3. Tachygraphe selon la revendication 2 **caractérisé par le fait que**, comme appui, un autre palier conçu au moins comme coussinet de palier est formé de telle manière qu'il n'est pas en alignement avec les paliers extérieurs (41 à 46) de l'arbre d'entraînement (27).

4. Tachygraphe selon la revendication 1 **caractérisé par le fait qu'**il est prévu une douille de palier (47) pouvant être liée à l'arbre d'entraînement (27) et que, sur le support (6) de disques-diagrammes, est ménagée une surface d'appui (48) correspondant à la douille de palier (47).

5. Tachygraphe selon la revendication 4 **caractérisé par le fait que** la douille de palier (47) peut être liée en blocage de rotation à l'arbre d'entraînement (27).

6. Tachygraphe selon la revendication 4 **caractérisé par le fait qu'**il est prévu un écarteur pouvant être enfiché sur l'arbre d'entraînement (27) dans le sens radial.

7. Tachygraphe selon la revendication 1 **caractérisé par le fait que** les paliers (41 à 46) sont conçus au moins partiellement comme coussinets de palier (41, 42, 43, 44).

8. Tachygraphe selon la revendication 1 **caractérisé par le fait que** l'arbre d'entraînement (27) est fabriqué en matière plastique et qu'une roue de friction est ménagée au milieu entre les extrémités extérieures de l'arbre d'entraînement.

9. Tachygraphe selon la revendication 1 **caractérisé par le fait que** l'arbre d'entraînement (27) est fabriqué en matière plastique et que des flasques sont ménagées sur l'arbre d'entraînement de telle manière que la distance entre les surfaces extérieures des flasques est supérieure à la distance entre les tranches frontales tournées l'une vers l'autre des paliers (41 à 46) de l'arbre d'entraînement (27) formés sur le support (6) de disques-diagrammes et libérés d'une manière adéquate.
